Europäisches Patentamt

European Patent Office

Office européen des brevets

(11) Publication number: **0 211 179**
A2

# (12) EUROPEAN PATENT APPLICATION

(21) Application number: 86107715.4

(22) Date of filing: 06.06.86

(51) Int. Cl.⁴: **G 06 F 5/00**
**G 06 F 9/30**

(30) Priority: 28.06.85 US 750717

(43) Date of publication of application:
25.02.87 Bulletin 87/9

(84) Designated Contracting States:
CH DE FR GB IT LI NL SE

(71) Applicant: Hewlett-Packard Company
Mail Stop 20 B-O 3000 Hanover Street
Palo Alto California 94304(US)

(72) Inventor: Baum, Allen J.
2310 Cornell Street
Palo Alto, CA. 94306(US)

(74) Representative: Liesegang, Roland, Dr.-Ing.
Sckellstrasse 1
D-8000 München 80(DE)

(54) Apparatus for performing variable shift.

(57) A storage register is defined which holds a variable shift amount or bit position to be used to execute shift/extract/deposit instructions in a barrel shifter. The variable shift amount value is typically data dependent and must be computed at run time. The computed value is loaded into the variable shift amount register prior to execution of the instruction.

FIG 1

0211179

## TITLE MODIFIED
### see front page

The present invention relates generally to dynamically determined variable data position shift signals in a computing system.

It is often desirable to shift operands by a specified amount or to extract or deposit bit fields at specified positions. Typically, the amount of desired shift or the position at which it is desired to extract or deposit bit fields is known in advance and appropriate instructions are entered when the program is complied. In cases where the amount of shift required is data dependent rather than a known amount, the amount of shift has to be computed dynamically; i.e., at run time. Typically this is a much slower operation than shifting or positioning by a literal amount specified in the immediate field of an instruction because the data path control cannot be set up in advance. This causes the overall cycle time of a basic instruction to increase, even though the frequency of variable shift amount or position is low.

Typical solutions to the variable shift and positioning problem have been to not allow variable shifting thereby requiring the use of instruction modification or branch tables. A general register containing possible values of shift amount (plus an offset in some cases) may also be used to generate shift amounts once the required value is

1

determined.  This generally increases the number of cycles taken to perform the instruction and may also increase the cycle time.

In accordance wtih the principles of the present invention a variable shift amount register is defined which holds the shift amount or bit field position for the shift/extract/deposit instructions.  The register is loaded prior to the execution of the variable shift/extract/deposit instruction.  The instruction cycle time is not increased and the logic depth is not increased.  Some predecoding of control is available which provides some of the extra time required to calculate the variable shift amount or bit field position and load the register.  Since the percentage of variable shift/extract/deposit instructions is small and, in some of the more important kernel cases, byte moves for example, the shift amount is calculated once and used repeatedly, the overall increase in execution time is neglible resulting in an overall improvement in system performance.

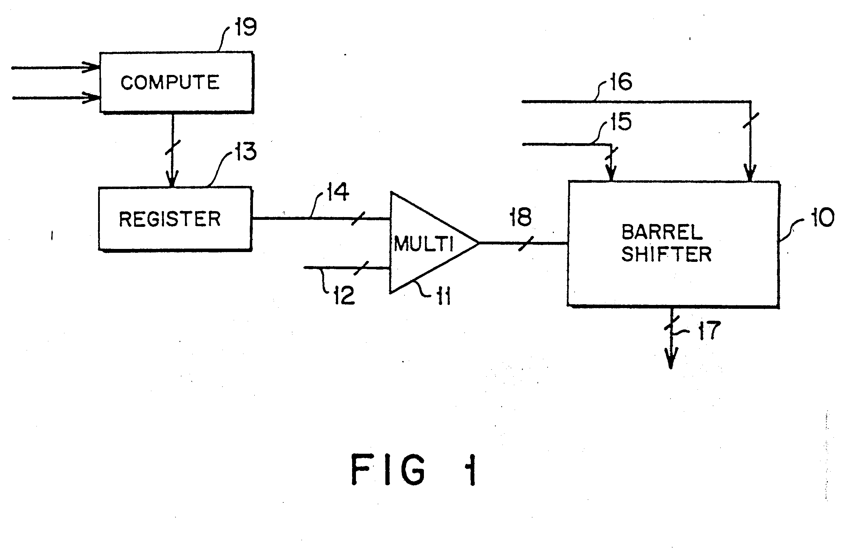

Figure 1 is a block diagram of a barrel shifter and shift amount register according to the principles of the present invention.

Referring now to Figure 1, a barrel shifter 10 has two data inputs on data bus line 15 and data bus line 16 and produces an output on bus line 17. The barrel shifter 10 output comprises the combination of the two data inputs as determined by the shifter control signal on line 18. If the amount of shift is know in advance, the immediate field of the shift instruction containing the amount of shift is input on line 12. If a variable shift/extract/deposit instruction is to be expected, the shift amount will be data dependent and is calculated from input data in computation block 19 prior to execution of the instruction. The variable shift amount is stored in a variable shift amount register 13 and is coupled to a multiplexer 11 via bus line 14. The multiplexer 11 couples either the contents of the variable shift amount register 13 or the known value on bus line 12 to the barrel shifter 10 as required.

4

1. An apparatus for performing variable shift operations on a first operand and a second operand, c h a r a c t e r i z e d by shifting means (10) for receiving said first operand (by 15) and said second operand (by 16) and for providing a resultant (on 17) in response to a predetermined shift control signal (on 18); storage register means (13) for storing a variable shift amount value (provided by 19); input means (12) for inputing a known shift amount value; and multiplexer means (11) coupled to the storage register means (13) and to the input means (12) and to the shifting means (10), said multiplexer means (11) responsive to a shift instruction for selecting the desired shift value from the variable shift amount value and the known shift amount value and coupling said desired shift value to the shifting means (10).

2. The apparatus as in claim 1, c h a r a c t e r - i z e d by means (19) for computing said variable shift amount value.

FIG 1